# EUROPÄISCHE PATENTSCHRIFT

(11) **EP 3 277 747 B1**
(45) Veröffentlichungstag und Bekanntmachung des Hinweises auf die Patenterteilung: **11.11.2020**
(21) Anmeldenummer: 16712788.5
(22) Anmeldetag: 21.03.2016
(51) Int. Cl.: C08J 9/00, C08F 20/14

(54) **HERSTELLUNG EINES PMMA-SCHAUMSTOFFS UNTER VERWENDUNG VON VERNETZERN, REGLERN UND TREIBMITTELN**
PRODUCTION OF A PMMA FOAM USING CROSSLINKING AGENTS, REGULATORS, AND BLOWING AGENTS
FABRICATION D'UNE MOUSSE DE PMMA À L'AIDE D'AGENTS DE RÉTICULATION, DE RÉGULATEURS ET D'AGENTS GONFLANTS

(30) Priorität: 31.03.2015 EP 15161898
(43) Veröffentlichungstag der Anmeldung: 07.02.2018
(73) Patentinhaber: Evonik Operations GmbH, 45128 Essen (DE)
(72) Erfinder: RICHTER, Thomas, 64293 Darmstadt (DE); SEIPEL, Christoph, 64832 Babenhausen (DE); BERNHARD, Kay, 64291 Darmstadt (DE); KRISHNAMOORTHY, Sivakumara K., 64319 Pfungstadt (DE); BÜHLER, Sebastian, 79104 Freiburg (DE)
(74) Vertreter: Evonik Patent Association
(86) Internationale Anmeldenummer: PCT/EP2016/056085
(87) Internationale Veröffentlichungsnummer: WO 2016/156078

(56) Entgegenhaltungen:
- DATABASE WPI Week 200026 Thomson Scientific, London, GB; AN 2000-298615 XP002742100, -& JP 2000 086804 A (SUMITOMO CHEM CO LTD) 28. März 2000 (2000-03-28)
- DATABASE WPI Week 200218 Thomson Scientific, London, GB; AN 2002-134683 XP002742101, -& JP 2001 302733 A (SUMITOMO CHEM CO LTD) 31. Oktober 2001 (2001-10-31)
- DATABASE WPI Week 200174 Thomson Scientific, London, GB; AN 2001-642254 XP002742102, -& JP 2001 233986 A (KANEKA CORP) 28. August 2001 (2001-08-28)

## Beschreibung

Die vorliegende Erfindung betrifft neuartige PMMA-Schäume, sowie deren Herstellung. Dabei werden bei der Herstellung Rezepturen eingesetzt, die neben Harnstoff als Treibmittel vor allem, zumeist in niedrigen Konzentrationen Vernetzer und Regler als Rezepturbestandteile aufweisen. Dabei konnte überraschend festgestellt werden, dass erfindungsgemäß ein stabiler, einfach herzustellender PMMA-Schaum mit sehr guten Eigenschaften erhalten werden kann.

### Stand der Technik

Polymerhartschaumstoffe sind allgemein bekannt und finden Anwendung in unterschiedlichsten Bereichen wie z.B. als Isolationsmaterial, in Verpackungen sowie im Leichtbau. Speziell im Bereich des Leichtbaus sollten die Schaumstoffe hohe Festigkeiten bei geringer Dichte aufweisen. Verwendung finden hier unter anderem PVC-, PET-, spezielle PU- und P(M)I-(Poly(meth)acrylimid-)Schaumstoffe, die unter anderem als Kernmaterial in Sandwichkompositen Anwendung finden.

PMMA Schaumstoffe sind in der Literatur oft beschrieben, haben aber bis dato wenig bis keine industriellen Bedeutung erlangt. Ein Grund hierfür ist die häufig beschriebene, aber sehr komplizierte Herstellung über Autoklavenverfahren, bei welchen PMMA mit gasförmigen Treibmitteln, wie z.B. CO₂ oder N₂, unter hohen Drücken im Autoklaven beladen und dann bei Druckentspannung expandiert wird. PMMA Hartschaumstoffe die mit einem Treibmittel geschäumt werden, welches vor der Polymerisation zum Monomer zugegeben wird und nach der Polymerisation gelöst im Polymer vorliegt, sind dagegen wenig beschrieben. Dennoch wären PMMA-Schäume aufgrund ihrer Festigkeit und der hohen Witterungsstabilität sehr interessante Werkstoffe für den Leichtbau.

Sekisui beschreibt in einer Reihe von Anmeldungen die Herstellung von sogenannten "Acrylic Foams" (z.B. JP 48043054, JP 2002003635, JP 2006045256, JP 2012201704, JP 2012201705, JP 2013075935). In diesen Anmeldungen werden jedoch, zusätzlich zu MMA, deutliche Mengen von Styrol und/oder Methacrylamiden als Comonomere beschrieben. Als Treibmittel dient vornehmlich Harnstoff.

In JP 55139433 wird die Herstellung eines Schaumstoffes beschrieben, der als Comonomer zwischen 4 und 35 Gew% Acryl- bzw. Methacrylsäure, sowie Harnstoff und Wasser als Treibmittel enthält. Dabei handelt es sich nicht im eigentlichen Sinne um einen PMMA-Schaum.

In US 4,816,492 ist die Herstellung von (Meth)acrylat-basierten Schäumen beschrieben, wobei die Monomermischung in Gegenwart von Treibmitteln polymerisiert wird. Als Treibmittel werden halogenierte Kohlenwasserstoffe verwendet. Das Arbeiten mit halogenierten Kohlenwasserstoffen hat jedoch das Problem, dass diese einen stark negativen Einfluss auf die Ozonschicht haben und damit deutlichen Einschränkungen unterliegen. Außerdem sind die Freiheitsgrade des Schäumungsprozesses eingeschränkt, so dass nur begrenzt und jeweils abhängig von einander die Porengrößen, die Porenverteilung und die Schaumdichte eingestellt werden können.

In IL 62693A und EP 0 032 720 wird die Herstellung von einem gezielt sehr grobporigen, geschäumten PMMA beschrieben. Die Herstellung erfolgt über Quellung von treibmittelhaltigen PMMA-Perlpolymerisaten in MMA und das anschließende Expandieren und Polymerisieren, wobei die Expansion vor der Aushärtung stattfindet. Das Treibmittel ist so gewählt, dass es bei einer Temperatur zum Aufschäumen der treibmittelbeladenen PMMA Perlen führt, die unterhalb der Temperatur liegt, die zur Polymerisation des noch flüssigen Reaktionsharzes führt. Der Fokus liegt hierbei auf der Herstellung eines transparenten, geschäumten Kunststoffes. Ein Problem ist bei diesem Verfahren, dass die Polymerisation zum Zeitpunkt der Schäumung noch nicht abgeschlossen ist und damit eine Stabilisierung der Poren nur in sehr engen Prozessparametergrenzen gelingt.

In EP 0 068 439 ist die Herstellung von PMMA basierten Schäumen durch die Polymerisation von MMA in Gegenwart eines Treibmittels und anschließendes Schäumen offenbart. Hervorzuheben ist hier, dass explizit ein Plastifizierungsmittel, insbesondere Methacrylsäureester mit mindestens drei Kohlenstoffatomen in der Alkylgruppe, in Mengen zwischen 5 und 40 Gewichtsteilen bezogen auf MMA eingesetzt werden, um Schäume zu erhalten. Als Treibmittel werden Kohlenwasserstoffe und/oder Fluorkohlenwasserstoffe angegeben. Ziel ist es, Schaumstoffe herzustellen, die große Poren von z.B. etwa 5 mm Durchmesser haben und somit die Transparenz des Basispolymers im Unterschied zu feinporigeren Schäumen erhalten bleibt. Die längerkettigen Alkylreste haben jedoch eine weichmachende Wirkung auf das Matrixpolymer, welches insbesondere für Hartschaumanwendungen aus mechanischen Gründen nicht gewünscht wird. Weiterhin werden auch halogenierte Kohlenwasserstoffe als Treibmittel beschrieben. Auch ist die Lehre der EP 0 068 439 nur auf sehr große Zellen in der Schaummatrix beschränkt.

In FR 1423844 wiederum ist die Herstellung von Blasen enthaltendem PMMA beschrieben, wobei als Treibmittel AIBN dient, welches gleichzeitig den Initiator für die Polymerisation darstellt. Durch die damit begründete hohe Konzentration an Initiator ist die Molmasse des Matrixpolymers im Schaum sehr niedrig. Diese wirkt sich wiederum negativ auf die mechanischen Eigenschaften des Schaums aus. Die in den Beispielen erwähnten Schäume besitzen jedoch nur eine geringe Anzahl von ungleichmäßig verteilten Poren. Auch sind die erhaltenen Dichten nicht aufgeführt.

### Aufgabe

Aufgabe der vorliegenden Erfindung war es damit, ein neues Verfahren zur Herstellung von PMMA-Schäumen zur Verfügung zu stellen, das die diskutierten Nachteile des Standes der Technik nicht aufweist.

Insbesondere war es dazu Aufgabe der vorliegenden Erfindung, eine PMMA-Rezeptur zur Verfügung zu stellen, die einerseits gut aufzuschäumen ist und dabei hohe Freiheitsgrade bzgl. der Einstellung der Porengröße, der Porenverteilung und der Schaumdichte zulässt. Andererseits soll das Material als Schaum mechanisch sehr belastbar sein.

Daraus ergaben sich insbesondere die Aufgaben, eine zur Schäumung geeignete PMMA-Rezeptur zur Verfügung zu stellen, die einerseits die zum Schäumen benötigte, ausreichende Fließfähigkeit und andererseits als Schaum ein hohes Molekulargewicht aufweisen soll, ohne dass dazu Weichmacher eingesetzt werden, oder dass eine Monomer-basierte Zusammensetzung aufgeschäumt wird und anschließend erst auspolymerisiert wird. Diese Aufgaben scheinen sich insbesondere gegenseitig zunächst auszuschließen.

Insbesondere lag der Erfindung die Aufgabe zugrunde, PMMA-Schäume zur Verfügung zu stellen, die einen Schäumungsfaktor von mindestens 2 und damit eine Dichte kleiner 150 kg/m³ aufweisen.

Weiterhin soll in diesem Verfahren auf Treibmittel, die ein hohes ODP (Ozon-Depletion-Potential), wie z.B. bei den meisten Halogenkohlenwasserstoffen der Fall, verzichtet werden.

Weitere nicht explizit genannte Aufgaben können sich aus dem Gesamtzusammenhang der Erfindung, den Ansprüchen, der Beschreibung oder den Beispielen ergeben.

### Lösung

Gelöst werden die Aufgaben durch ein neuartiges Verfahren zur Herstellung von PMMA-Schaumstoffen, bei dem die Herstellung der Schaumstoffe durch eine Polymerisation, wie zum Beispiel eine Plattenpolymerisation von Monomerrmischungen, enthaltend überwiegend MMA, bzw. eines Sirups aus einem überwiegend oder ganz aus MMA bestehenden Polymer und einer überwiegend oder ganz aus MMA zusammengesetzten Monomermischung in Gegenwart von Harnstoff als Treibmittel erfolgen. In einem zweiten Schritt wird die so erhaltene, auspolymerisierte und mit Treibmittel beladene PMMA Platte dann durch Erwärmung aufgeschäumt.

Dieses Verfahren ist insbesondere dadurch gekennzeichnet, dass eine Zusammensetzung, enthaltend 0,01 bis 2,0 Gew%, bevorzugt 0,2 bis 1,5 Gew% eines oder mehrerer Initiatoren, 2 bis 20 Gew%, bevorzugt 3 bis 15 Gew% Harnstoffals Treibmittel und 75 bis 97,9 Gew%, bevorzugt 80 bis 96,8 Gew% einer Monomermischung zunächst bei einer Temperatur zwischen 20 °C und 100 °C, bevorzugt zwischen 30 °C und 70 °C polymerisiert und anschließend bei einer Temperatur zwischen 130 °C und 250 °C, bevorzugt zwischen 150 °C und 230 °C geschäumt wird. Neben den genannten Komponenten kann die Zusammensetzung bis zu 22,99 Gew% weiterer Komponenten enthalten. Beispiele für diese weiteren Komponenten sind insbesondere weitere Polymerkomponenten, bei denen es sich nicht um MMA-haltige Polymere handelt, UV-Stabilisatoren, Füllstoffe und Pigmente.

Dabei ist die Monomerrmischung aus 79,70 bis 99,995 mol%, bevorzugt 89,85 bis 99,988 mol% MMA, 0 bis 20 mol%, bevorzugt 0 bis 10 mol% eines oder mehrerer mit MMA copolymerisierbarer Monomere, 0,002 bis 0,5 mol%, bevorzugt 0,005 bis 0,3 mol% Vernetzer und 0,003 bis 1,5 mol%, bevorzugt 0,006 bis 1 mol% Regler zusammengesetzt. Dabei können das MMA und die copolymerisierbaren Monomere vollständig als Monomere eingesetzt werden. In einer besser zu handhabenden Ausführungsform der Erfindung können das MMA und die copolymerisierbaren Monomere jedoch auch zu einem Anteil von bis zu 80 Gew%, bevorzugt zu maximal 50 Gew% als Polymer und/oder Oligomer vorliegen. Der Vorteil eines solchen Sirups, bestehend aus Monomeren und Polymeren bzw. Oligomeren, ist, dass dieser eine höhere Viskosität als eine reine Monomermischung hat und bei der Polymerisation auch einen geringeren Dampfdruck entwickelt.

Ähnliche Verfahren sind aus der JP 2000086804, der JP 2001302733 und der JP 2001233986 bekannt; allerdings wird dort eine Emulsions-Polymerisation durchgeführt, wobei Kohlenwasserstoffe als Treibmittel eingesetzt werden.

Bei den mit MMA copolymerisierbaren Monomeren kann es sich insbesondere um Acrylate, wie insbesondere Methyl-, Ethyl-, Propyl- oder n-Butylacrylat handeln. Die Copolymerisation von Acrylaten stabilisiert den Schaumstoff insbesondere bei hohen Schäumungstemperaturen zusätzlich, da diese Schäumungstemperaturen oberhalb der Ceiling-Temperatur des reinen MMA liegen können. Für den Fall, dass keine stabilisierenden Comonomere eingebaut werden, ist eine kürzere Schäumungszeit oder eine entsprechend tiefere Schäumungstemperatur zu bevorzugen.

Weitere Beispiele für geeignete Comonomere sind (Meth)acrylsäure, Methacrylate, wie Ethylmethacrylat, Propylmethacryl, n-Butylmethacrylat, Styrol, (Meth)acrylamid, ein N-Alkyl(meth)acrylamid mit ein bis 12 Kohlenstoffatomen in der Alkylgruppe, ein Hydroxylalkyl(meth)acrylat mit ein bis 4 Kohlenstoffatomen in der Alkylgruppe, ein Polyether(meth)acrylat, wobei der Polyether ein Molekulargewicht zwischen 200 und 5000 aufweisen kann. Die Comonomere können dabei auch als eine Mischung aus mindestens zwei dieser Comonomere vorliegen. Sollte es sich bei diesen Comonomeren um n-Butyl(meth)acrylat und/oder n-Propyl(meth)acrylat handeln, sollte der Anteil dieser an der Gesamtzusammensetzung insgesamt 3 Gew% nicht überschreiten.

Bei den Vernetzern handelt es sich bevorzugt um ein di-, tri- oder tetra-(Meth)acrylat, um Allyl(meth)acrylat, um Triallylcyanurat, um Triallylisocyanurat oder um eine Mischung, enthaltend mindestens zwei dieser Vernetzer.

Bei dem Regler handelt es sich bevorzugt um eine Verbindung mit ein bis fünf Mercaptangruppen, um ein γ-Terpinen oder um eine Mischung aus mindestens zwei dieser Regler. Besonders bevorzugt handelt es sich bei dem Regler um Penta-erithrit-tetra-thioglycolat, 2-Mercaptoethanol, ein Alkylmercaptan mit 2 bis 12 Kohlenstoffatomen, Thyoclykolsäure, ein Thioglycolat, γ-Terpinen oder eine Mischung aus mindestens zwei dieser Regler.

Ein besonders wichtiger Aspekt der vorliegenden Erfindung ist die Verwendung von Vernetzern und Reglern in der zu schäumenden Zusammensetzung. Diese gegenüber dem Stand der Technik neue Kombination von Kompenenten führt überraschend dazu, dass die Schäumbarkeit von mit Treibmitteln beladenem PMMA deutlich erhöht wird und ein stabiler Schaumstoff mit besonders guter, d.h. enger Porengrößenverteilung erhalten wird. Dieser hier gefundene Effekt war insbesondere nicht zu erwarten und damit überraschend, da normalerweise der Einsatz von Vernetzern die Fließfähigkeit des Polymers behindern würde und somit eine Verschlechterung der Schäumbarkeit hervorrufen sollte.

Besonders positiv wirken sich insbesondere die beschriebene Kombination relativ geringer Mengen des Vernetzers mit den beschriebenen geringen Mengen des Reglers auf die Schäumbarkeit aus, da durch den Einsatz des Vernetzers die Schäumbarkeit derart steigt, dass auf den Einsatz von größeren Mengen Regler verzichtet werden kann. Dies ist von Vorteil, da die mechanischen Eigenschaften des Matrixpolymers, und damit die des PMMA-Schaumes an sich, nicht negativ beeinflusst werden. Ferner sind hohe Molmassen oder - besser - vernetzt Polymere auf Grund der besseren Mechanik des Schaumstoffs sehr erwünscht. Prinzipiell ist für die gute Schäumbarkeit eines Polymers eine bestimmte Plastizität bzw. Fließfähigkeit des Matrixpolymers bei der Schäumungstemperatur wichtig, da bei der Schäumung ein Fließen des Matrixpolymers erfolgt. Ist die Plastizität bzw. Fließfähigkeit des Matrixpolymers bei der Schäumungstemperatur zu gering, findet kein Aufschäumen statt. Es ist allgemein bekannt, dass die Fließfähigkeit eines Polymers mit steigender Molmasse bei gleicher Temperatur gemeinhin abnimmt. Die Anforderungen an die Schäumbarkeit und eine möglichst hohe Molmasse scheinen sich demnach zu wiedersprechen. Überraschend lässt sich dieser Widerspruch durch die Zugabe geringer Mengen Vernetzer und einer nur reduzierten Menge eines Reglers überwinden.

Weiterhin weisen die erfindungsgemäß hergestellten PMMA-Schaumstoffe eine überraschend hohe Festigkeit und gleichzeitig eine überraschend geringe Sprödigkeit auf und können daher z.B. Anwendung im Leichtbau finden. Weiterhin auf Grund der guten Materialeigenschaften auf den Einsatz von Weichmachern, wie z.B. längerkettigen Alkyl(meth)acrylaten oder Phthalaten, die sich nach bisherigen Erkenntnissen positiv auf die Fließfähigkeit bzw. die Schäumbarkeit auswirken, jedoch gleichzeitig die mechanischen Eigenschaften des PMMA-Schaumstoffes, insbesondere die Festigkeit, negativ beeinflussen, verzichtet werden.

Genauso überraschend wurde jedoch auch gefunden, dass nicht gänzlich auf den Regler verzichtet werden kann, sondern dennoch geringe Mengen zugesetzt werden müssen, um ein optimales Schäumen zu gewehrleisten.

Die Polymerisation erfolgt bevorzugt in einem formgebenden Gefäß, insbesondere in Form einer Kammerpolymerisation zwischen zwei Platten, wie z.B. Glasplatten. Dabei kann es sich beispielswiese im einfachsten Fall um eine rechteckige Wanne handeln. Durch die Polymerisation in einer solchen Wanne erhält man später eine Platte, deren Dicke durch den Füllstand der Wanne bzw. den Plattenabstand bestimmt wurde. Darüber hinaus sind jedoch auch komplexere Formen als Gefäß denkbar. Bevorzugt erfolgt die Polymerisation bei einer Temperatur zwischen 30 und 70 °C. Dabei können als Initiatoren neben allgemein bekannt Radikalstartern, wie zum Beispiel Peroxide oder Azoinitiatoren, auch Redoxsysteme oder UV-Initiatoren eingesetzt werden. Dabei betreffen die Polymerisationstemperaturen unterhalb von 40 °C insbesondere diese RedoxSysteme und UV-Initiatoren. Die UV-Initiatoren werden durch Bestrahlung mit entsprechenden UV-Licht initiiert, während es sich bei den Redox-Initatoren um Zweikomponentensysteme handelt, deren Initiierung durch Mischen der beiden Komponenten und der Monomere erfolgt.

Das Schäumen kann anschließend in dem gleichen Gefäß erfolgen, wobei die Volumenzunahme in diesem Fall auf eine Richtung, die offene Seite des Gefäßes beschränkt wird. Das polymerisierte Material kann jedoch auch freiliegend aufgeschäumt werden. Bevorzugt erfolgt das Schäumen in einem Ofen. Alternativ ist es auch möglich, das Schäumen durch Bestrahlung mit IR-Strahlung, insbesondere mit einer Wellenlänge zwischen 0,78 und 2,20, bevorzugt zwischen 1,20 und 1,40 µm, zu bewirken. Eine weitere Alternative stellt das Aufschäumen mit Mikrowellen dar. Auch die Kombination aus verschiedenen Methoden, wie IR-Strahlung, Mikrowellen und/oder Heizen in einem Ofen ist denkbar.

Sowohl das Schäumen als auch die zuvor erfolgte Polymerisation können jeweils in mehreren Temperaturstufen erfolgen. Bei der Polymerisation kann durch eine spätere Erhöhung der Temperatur zusätzlich der Umsatz gesteigert und der Restmonomergehalt damit verringert werden. Beim Schäumen kann durch eine stufenweise Erhöhung der Schäumungstemperatur die Porenverteilung, die Porengröße und die Anzahl der Poren beeinflusst werden.

Optional kann das Verfahren auch derart durchgeführt werden, dass die Polymerisation nur unvollständig, in diesem Fall bevorzugt zu einem Umsatz von mindestens 80% durchgeführt wird und die endgültige Auspolymerisation beim Schäumen erfolgt. Ein solches Verfahren hat den Vorteil, dass zu Beginn des Schaumvorgangs die verbliebenen Monomere einen weichmachenden Effekt haben, ohne dass im fertigen Schaumstoff eine weichmachende Verbindung verbleiben würde. Somit würde bei einer solchen Ausführungsform die Polymerisation und das Schäumen teilweise - bei einer Schäumungstemperatur - simultan erfolgen.

Neben dem erfindungsgemäßen Verfahren sind auch PMMA-Schaumstoffe, die über ein solches Verfahren herstellbar sind, Bestandteil der vorliegenden Erfindung. Ein solcher PMMA-Schaumstoff ist dabei dadurch gekennzeichnet, dass der Feststoffanteil dieses Schaums zu mindestens 95 Gew% aus einem Polymer, zusammengesetzt aus 79,70 bis 99,995 mol% MMA, 0 bis 20 mol% eines oder mehrerer mit MMA copolymerisierbarer Monomere, 0,002 bis 0,5 mol% Vernetzer, 0,003 bis 1,5 mol% Reglerrest und einem Initiatorrest, besteht. Weiterhin weist der Schaumstoff eine Dichte zwischen 25 und 400 kg/m³, bevorzugt zwischen 40 und 250 kg/m³ auf.

Bevorzugt sind insbesondere PMMA-Schaumstoffe, in denen das Polymer ausschließlich aus MMA, einem Initiator, einem oder mehreren Vernetzern, ausgewählt aus di-, tri- oder tetra-(Meth)acrylaten, Allyl(meth)acrylat, Triallylcyanurat und/oder Triallylisocyanurat, und einem oder mehreren Reglern, ausgewählt aus Verbindungen mit ein bis fünf Mercaptangruppen und/oder γ-Terpinen, bevorzugt ausgewählt aus Penta-erithrit-tetra-thioglycolat, 2-Mercaptoethanol, Alkylmercaptanen mit 2 bis 12 Kohlenstoffatomen, Thyoclykolsäure, Thioglycolat und/oder γ-Terpinen, gebildet wurde.

Die erfindungsgemäß hergestellten PMMA-Schaumstoffe sowie die erfindungsgemäßen PMMA-Schaumstoffe können vielfältig Verwendung finden. Beispiele für solche Verwendungen sind witterungsbeständige Isolationsmaterialien, Kernmaterial für Sandwich Composites, im Leichtbau, als Verpackungsmaterial, als Energieabsorber in Crashelementen, in architektonischen Bauelementen, als Diffusor in lichttechnischen Anwendungen, im Möbelbau, im Bootsbau, im Fahrzeugbau, in der Luftfahrtindustrie oder im Modellbau.

### Vergleichs- und Referenzbeispiele

### Vergleichsbeispiel 1

In diesem Vergleichsbeispiel wurde ein PMMA-Schaum aus einer Zusammensetzung, enthaltend einen Regler, jedoch keinen Vernetzer, hergestellt.

Eine Mischung aus 281,13 g eines Polymethacrylats, hergestellt ausschließlich aus MMA, 1124,52 g MMA, 0,75 g 2,2'-Azobis-(2,4-dimethylvaleronitril), 3,60 g Pentaerythrittetrathioglycolat als Regler, 15,00 g n-Butylacrylat und 75,00 g tert-Butylmethacrylat wurde zwischen zwei seitlich mit einem Gummistreifen abgedichtete Glasplatten der Abmessungen 400 mm * 300 mm und einem Abstand zueinander von 10 mm für 24 h bei 42 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Es wurde ein grobporiger, sehr unregelmäßiger Schaumstoff erhalten.

### Beispiel 1

In diesem nicht erfindungsgemäßen Referenzbeispiel wurde ein PMMA-Schaum aus einer Zusammensetzung, enthaltend eine relativ geringe Menge Regler sowie eine relativ geringe Menge Vernetzer, hergestellt.

Eine Mischung aus 281,25 g eines Polymethacrylats, hergestellt ausschließlich aus MMA, 1125,00 g MMA, 0,75 g 2,2'-Azobis-(2,4-dimethylvaleronitril), 0,60 g Pentaerythrittetrathioglycolat als Regler, 15,00 g n-Butylacrylat, 75,00 g tert-Butylmethacrylat, 1,50 g Rewopol SB-DO 75 als Trennmittel und 0,90 g Ethylenglycoldimethacrylat als Vernetzer wurde zwischen zwei seitlich mit einem Gummistreifen abgedichtete Glasplatten der Abmessungen 400 mm * 300 mm und einem Abstand zueinander von 10 mm für 24 h bei 42 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Die Mischung schäumte sehr gut und die Poren waren deutlich feiner als bei dem Schaum, erhalten gemäß Vergleichsbeispiel 1.

Das Trennmittel hat erfahrungsgemäß keinen Einfluss auf die Polymerisation oder den Schäumvorgang und dient einzig zur leichteren Entfernung der Glasplatten von dem Polymerblock.

### Beispiel 2 bis 5

In diesem nicht erfindungsgemäßen Referenzbeispiel wurde ein PMMA-Schaum aus verschiedenen Zusammensetzungen, enthaltend variierende Mengen Regler sowie eine relativ geringe Menge Vernetzer, hergestellt.

Mischungen jeweils aus einem Polymethacrylat (Menge siehe Tab.1), hergestellt ausschließlich aus MMA, MMA (Menge siehe Tab.1), 0,75 g 2,2'-Azobis-(2,4-dimethylvaleronitril), Pentaerythrittetrathioglycolat als Regler (Menge siehe Tab.1), 15,00 g n-Butylacrylat, 75,00 g tert-Butylmethacrylat, 1,50 g Rewopol SB-DO 75 und 0,90 g Ethylenglycoldimethacrylat als Vernetzer wurde zwischen zwei seitlich mit einem Gummistreifen abgedichtete Glasplatten der Abmessungen 400 mm * 300 mm und einem Abstand zueinander von 10 mm für 24 h bei 42 °C polymerisiert. Darauf erfolgte 4 h Tempern bei 115 °C. Nach entfernen der Glasplatten wurde schließlich die erhaltene PMMA-Platte 1 h bei 205 °C in einem Ofen geschäumt. Alle vier Mischungen schäumten sehr gut auf. Je mehr Regler eingesetzt wurde, desto schneller erfolgte das Schäumen. Die Poren waren deutlich feiner als bei dem Schaum, erhalten gemäß Vergleichsbeispiel 1.

**Tabelle 1**

| Komponente | Beispiel 2 | Beispiel 3 | Beispiel 4 | Beispiel 5 |
|---|---|---|---|---|
| PMMA | 281,25 g | 281,19 g | 281,13 | 281,01 g |
| MMA | 1125,00 g | 1124,76 g | 1124,52 | 1124,04 g |
| Pentaerythrittetrath -ioglycolat | 0,60 g | 0,90 g | 1,20 g | 1,80 g |

### Beispiel 6

In diesem nicht erfindungsgemäßen Referenzbeispiel wurde ein PMMA-Schaum aus einer Zusammensetzung, enthaltend Regler und Vernetzer, hergestellt. Dabei wurde hier kein Treibmittel verwendet, welches aus einem copolymerisierbaren Bestandteil der Zusammensetzung freigesetzt wird, sondern frei in dieser vorliegt.

Eine Mischung aus 281,25 g eines Polymethacrylats, hergestellt ausschließlich aus MMA, 1125,00 g MMA, 0,75 g 2,2'-Azobis-(2,4-dimethylvaleronitril), 0,60 g Pentaerythrittetrathioglycolat als Regler, 15,00 g n-Butylacrylat, 75,00 g Isopropanol, 1,50 g Rewopol SB-DO 75 und 0,90 g Ethylenglycoldimethacrylat als Vernetzer wurde zwischen zwei seitlich mit einem Gummistreifen abgedichtete Glasplatten der Abmessungen 400 mm * 300 mm und einem Abstand zueinander von 10 mm für 24 h bei 42 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Es wurde ein eher grobporiges, sehr gut aufgeschäumtes Material erhalten.

### Vergleichsbeispiel 2

In diesem Vergleichsbeispiel wurde ein PMMA-Schaum aus einer Zusammensetzung, enthaltend einen Regler, jedoch keinen Vernetzer, hergestellt.

Eine Mischung aus 162,21 g eines Polymethacrylats, hergestellt ausschließlich aus MMA, 648,56 g MMA, 0,85 g 2,2'-Azobis-(2,4-dimethylvaleronitril), 0,68 g Pentaerythrittetrathioglycolat als Regler und 37,40 g tert-Butylmethylether wurde zwischen zwei seitlich mit einem Gummistreifen abgedichtete Glasplatten der Abmessungen 400 mm * 300 mm und einem Abstand zueinander von 10 mm für 3 h bei 50 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Die Probe konnte nicht geschäumt werden. Es entstanden lediglich kleine Blasen im Polymerisat.

### Vergleichsbeispiel 3

In diesem Vergleichsbeispiel wurde ein PMMA-Schaum aus einer Zusammensetzung, enthaltend gegenüber Vergleichsbeispiel 2 geringere Mengen Regler und keinen Vernetzer, hergestellt. Weiterhin wurde gegenüber Vergleichsbeispiel 2 die Menge des Treibmittels deutlich erhöht.

Eine Mischung aus 162,00 g eines Polymethacrylats, hergestellt ausschließlich aus MMA, 648,00 g MMA, 0,85 g 2,2'-Azobis-(2,4-dimethylvaleronitril), 0,34 g Pentaerythrittetrathioglycolat als Regler und 65,50 g tert-Butylmethylether wurde zwischen zwei seitlich mit einem Gummistreifen abgedichtete Glasplatten der Abmessungen 400 mm * 300 mm und einem Abstand zueinander von 10 mm für 3 h bei 50 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Die Probe konnte nicht geschäumt werden. Es entstanden lediglich kleine Blasen im Polymerisat.

### Vergleichsbeispiel 4

In diesem Vergleichsbeispiel wurde ein PMMA-Schaum aus einer Zusammensetzung, enthaltend geringere Mengen Regler und keinen Vernetzer, hergestellt. Gegenüber Vergleichsbeispiel 2 wurde das Treibmittel variiert.

Eine Mischung aus 167,00 g eines Polymethacrylats, hergestellt ausschließlich aus MMA, 668,00 g MMA, 0,85 g 2,2'-Azobis-(2,4-dimethylvaleronitril), 0,34 g Pentaerythrittetrathioglycolat als Regler und 31,88 g tert-Butanol wurde zwischen zwei seitlich mit einem Gummistreifen abgedichtete Glasplatten der Abmessungen 400 mm * 300 mm und einem Abstand zueinander von 10 mm für 3 h bei 50 °C polymerisiert. Darauf erfolgte 4 h Tempern bei 115 °C. Nach entfernen der Glasplatten wurde schließlich die erhaltene PMMA-Platte 1 h bei 215 °C in einem Ofen geschäumt. Die Probe konnte nicht geschäumt werden. Es entstanden lediglich kleine Blasen im Polymerisat.

## Patentansprüche

1. Verfahren zur Herstellung eines Polymethacrylat-Schaumstoffs, **dadurch gekennzeichnet, dass** eine Zusammensetzung, enthaltend 0,01 bis 2,0 Gew% eines Initiators, 2 bis 20 Gew% Harnstoff als Treibmittel und 75 bis 97,9 Gew% einer Monomermischung, wobei die Monomermischung zusammengesetzt ist aus 79,70 bis 99,995 mol% MMA, 0 bis 20 mol% eines oder mehrerer mit MMA copolymerisierbarer Monomere, 0,002 bis 0,5 mol% Vernetzer und 0,003 bis 1,5 mol% Regler und zu 0 bis 80 Gew% als Polymer und/oder Oligomer vorliegen kann, bei einer Temperatur zwischen 20 °C und 100 °C polymerisiert und anschließend zwischen 130 °C und 250 °C geschäumt wird.

2. Verfahren gemäß Anspruch 1, **dadurch gekennzeichnet, dass** die Zusammensetzung 0,2 bis 1,5 Gew% des Initiators, 3 bis 15 Gew% Harnstoff als Treibmittel und 80 bis 96,8 Gew% einer Monomermischung enthält, wobei die Monomermischung zusammengesetzt ist aus 89,85 bis 99,988 mol% MMA, 0 bis 10 mol% eines oder mehrerer mit MMA copolymerisierbarer Monomere, 0,005 bis 0,3 mol% Vernetzer und 0,006 bis 1 mol% Regler und zu 0 bis 50 Gew% als Polymer und/oder Oligomer vorliegen.

3. Verfahren gemäß Anspruch 1 oder 2, **dadurch gekennzeichnet, dass** die Polymerisation bei einer Temperatur zwischen 30 °C und 70 °C und das Schäumen bei einer Temperatur zwischen 150 °C und 230 °C erfolgen.

4. Verfahren gemäß mindestens einem der Ansprüche 1 bis 3, **dadurch gekennzeichnet, dass** es sich bei dem Vernetzer um ein di-, tri- oder tetra-(Meth)acrylat, um Allyl(meth)acrylat, um Triallylcyanurat, um Triallylisocyanurat oder um eine Mischung, enthaltend mindestens zwei dieser Vernetzer, handelt.

5. Verfahren gemäß mindestens einem der Ansprüche 1 bis 4, **dadurch gekennzeichnet, dass** es sich bei dem Regler um eine Verbindung mit ein bis fünf Mercaptangruppen, um ein γ-Terpinen oder um eine Mischung aus mindestens zwei dieser Regler handelt.

6. Verfahren gemäß Anspruch 5, **dadurch gekennzeichnet, dass** es sich bei dem Regler um Penta-erithrit-tetra-thioglycolat, 2-Mercaptoethanol, ein Alkylmercaptan mit 2 bis 12 Kohlenstoffatomen, Thioglykolsäure, ein Thioglycolat, γ-Terpinen oder eine Mischung aus mindestens zwei dieser Regler handelt.

7. Verfahren gemäß mindestens einem der Ansprüche 1 bis 6, **dadurch gekennzeichnet, dass** es sich bei den Comonomeren um (Meth)acrylsäure, Methylacrylat, Ethyl(meth)acrylat, Propyl(meth)acryl, n-Butyl(meth)acrylat, Styrol, (Meth)acrylamid, ein N-Alkyl(meth)acrylamid mit ein bis 12 Kohlenstoffatomen in der Alkylgruppe, ein Hydroxylalkyl(meth)acrylat mit ein bis 4 Kohlenstoffatomen in der Alkylgruppe oder um Mischungen aus mindestens zwei dieser Comonomere handelt, wobei der Anteil an n-Butyl(meth)acrylat und n-Propyl(meth)acrylat insgesamt 3 Gew% nicht überschreitet.

8. Verfahren gemäß mindestens einem der Ansprüche 1 bis 7, **dadurch gekennzeichnet, dass** die Polymerisation und/oder die Schäumung stufenweise bei unterschiedlichen Temperaturen erfolgen.

9. Verfahren gemäß mindestens einem der Ansprüche 1 bis 8, **dadurch gekennzeichnet, dass** die Polymerisation und das Schäumen zumindest teilweise simultan erfolgen.

10. PMMA-Schaum, erhältlich mittels einem Verfahrens gemäß mindestens einem der Ansprüche 1 bis 9, **dadurch gekennzeichnet, dass** der Feststoffanteil dieses Schaums zu mindestens 95 Gew% aus einem Polymer, hergestellt aus einer Mischung, bestehend aus 79,70 bis 99,995 mol% MMA, 0 bis 20 mol% eines oder mehrerer mit MMA copolymerisierbarer Monomere, 0,002 bis 0,5 mol% Vernetzer, 0,003 bis 1,5 mol% Regler und einem Initiator, und dass der Schaum eine Dichte zwischen 25 und 400 kg/m³ aufweist.

11. PMMA-Schaum gemäß Anspruch 10, **dadurch gekennzeichnet, dass** die PMMA-Schaum eine Dichte zwischen 40 und 250 kg/m³ aufweist.

12. PMMA-Schaum gemäß Anspruch 10 oder 11, **dadurch gekennzeichnet, dass** das Polymer ausschließlich aus MMA, einem Initiator und aus den Komponenten gemäß den Ansprüchen 4 bis 7 gebildet wurde.

## Claims

1. Process for producing a polymethacrylate foam, **characterized in that** a composition containing from 0.01 to 2.0 wt% of an initiator, from 2 to 20 wt% of urea as a blowing agent and from 75 to 97.9 wt% of a monomer mixture, wherein said monomer mixture is composed of from 79.70 to 99.995 mol% of MMA, from 0 to 20 mol% of one or more MMA-copolymerizable monomers, from 0.002 to 0.5 mol% of crosslinker and from 0.003 to 1.5 mol% of chain transfer agent and may be present as polymer and/or oligomer to an extent of from 0 to 80 wt%, is polymerized at a temperature between 20°C and 100°C and subsequently foamed at between 130°C and 250°C.

2. Process according to Claim 1, **characterized in that** the composition contains from 0.2 to 1.5 wt% of the initiator, from 3 to 15 wt% of urea as the blowing agent and from 80 to 96.8 wt% of a monomer mixture, wherein said monomer mixture is composed of from 89.85 to 99.988 mol% of MMA, from 0 to 10 mol% of one or more MMA-copolymerizable monomers, from 0.005 to 0.3 mol% of crosslinker and from 0.006 to 1 mol% of chain transfer agent and is present as polymer and/or oligomer to an extent of from 0 to 50 wt%.

3. Process according to Claim 1 or 2, **characterized in that** the temperature is between 30°C and 70°C for the polymerization and between 150°C and 230°C for the foaming.

4. Process according to one or more of Claims 1 to 3, **characterized in that** the crosslinker comprises a di-, tri- or tetra(meth)acrylate, allyl (meth)acrylate, triallyl cyanurate, triallyl isocyanurate or a mixture containing two or more thereof.

5. Process according to one or more of Claims 1 to 4, **characterized in that** the chain transfer agent comprises a compound having from one to five mercaptan groups, a γ-terpinene or a mixture of two or more thereof.

6. Process according to Claim 5, **characterized in that** the chain transfer agent comprises pentaerythritol tetrathioglycolate, 2-mercaptoethanol, an alkyl mercaptan having from 2 to 12 carbon atoms, thioglycolic acid, a thioglycolate, γ-terpinene or a mixture of two or more thereof.

7. Process according to one or more of Claims 1 to 6, **characterized in that** the comonomers comprise (meth)acrylic acid, methyl acrylate, ethyl (meth)acrylate, propyl (meth)acrylate, n-butyl (meth)acrylate, styrene, (meth)acrylamide, an N-alkyl(meth)acrylamide having one to 12 carbon atoms in the alkyl group, a hydroxyalkyl (meth)acrylate having one to 4 carbon atoms in the alkyl group or mixtures of two or more thereof, the total fraction of n-butyl (meth)acrylate and n-propyl (meth)acrylate not exceeding 3 wt%.

8. Process according to one or more of Claims 1 to 7, **characterized in that** the polymerization and/or the foaming are/is effected stagewise at different temperatures.

9. Process according to one or more of Claims 1 to 8, **characterized in that** the polymerization and the foaming are effected simultaneously to some extent at least.

10. PMMA foam which can be obtained by means of a process according to one or more of Claims 1 to 9, **characterized in that** the solid fraction of this foam consists to an extent not less than 95 wt% of a polymer prepared from a mixture consisting of from 79.70 to 99.995 mol% of MMA, 0 to 20 mol% of one or more MMA-copolymerizable monomers, from 0.002 to 0.5 mol% of crosslinker, from 0.003 to 1.5 mol% of chain transfer agent and an initiator, and **in that** the foam has a density between 25 and 400 kg/m³.

11. PMMA foam according to Claim 10, **characterized in that** the PMMA foam has a density between 40 and 250 kg/m³.

12. PMMA foam according to Claim 10 or 11, **characterized in that** the polymer was formed exclusively from MMA, an initiator and from the components according to Claims 4 to 7.

## Revendications

1. Procédé pour la préparation d'une mousse de polyméthacrylate, **caractérisé en ce qu'**une composition, contenant 0,01 à 2,0 % en poids d'un initiateur, 2 à 20 % en poids d'urée en tant que propulseur et 75 à 97,9 % en poids d'un mélange de monomères, le mélange de monomères étant composé de 79,70 à 99,995 % en moles de MMA, 0 à 20 % en moles d'un ou plusieurs monomères copolymérisables avec le MMA, 0,002 à 0,5 % en moles d'agent de réticulation et 0,003 à 1,5 % en moles de régulateur et pouvant être présent à hauteur de 0 à 80 % en poids en tant que polymère et/ou oligomère, est polymérisée à une température entre 20 °C et 100 °C et ensuite est moussée entre 130 °C et 250 °C.

2. Procédé selon la revendication 1, **caractérisé en ce que** la composition contient 0,2 à 1,5 % en poids de l'initiateur, 3 à 15 % en poids d'urée en tant que propulseur et 80 à 96,8 % en poids d'un mélange de monomères, le mélange de monomères étant composé de 89,85 à 99,988 % en moles de MMA, 0 à 10 % en moles d'un ou plusieurs monomères copolymérisables avec le MMA, 0,005 à 0,3 % en moles d'agent de réticulation et 0,006 à 1 % en moles de régulateur et est présent à hauteur de 0 à 50 % en poids en tant que polymère et/ou oligomère.

3. Procédé selon la revendication 1 ou 2, **caractérisé en ce que** la polymérisation est réalisée à une température entre 30 °C et 70 °C et le moussage est réalisé à une température entre 150 °C et 230 °C.

4. Procédé selon au moins l'une des revendications 1 à 3, **caractérisé en ce que** l'agent de réticulation est un di(méth)acrylate, un tri(méth)acrylate ou un tétra(méth)acrylate, un (méth)acrylate d'allyle, un cyanurate de triallyle, un isocyanurate de triallyle ou un mélange contenant au moins deux de ces agents de réticulation.

5. Procédé selon au moins l'une des revendications 1 à 4, **caractérisé en ce que** le régulateur est un composé comportant un à cinq groupes mercaptan, un γ-terpène ou un mélange d'au moins deux de ces régulateurs.

6. Procédé selon la revendication 5, **caractérisé en ce que** le régulateur est le tétrathioglycolate de pentaérythritol, le 2-mercaptoéthanol, un alkylmercaptan comportant 2 à 12 atomes de carbone, l'acide thioglycolique, un thioglycolate, des γ-terpènes ou un mélange d'au moins deux de ces régulateurs.

7. Procédé selon au moins l'une des revendications 1 à 6, **caractérisé en ce que** les comonomères sont l'acide (méth)acrylique, l'acrylate de méthyle, un (méth)acrylate d'éthyle, un (méth)acrylate de propyle, un (méth)acrylate de n-butyle, le styrène, un (méth)acrylamide, un N-alkyl-(méth)acrylamide comportant un à 12 atomes de carbone dans le groupe alkyle, un (méth)acrylate d'hydroxyalkyle comportant un à 4 atomes de carbone dans le groupe alkyle ou des mélanges d'au moins deux de ces comonomères, la proportion de (méth)acrylate de n-butyle et de (méth)acrylate de n-propyle n'excédant au total pas 3 % en poids.

8. Procédé selon au moins l'une des revendications 1 à 7, **caractérisé en ce que** la polymérisation et/ou le moussage sont réalisés par étapes à différentes températures.

9. Procédé selon au moins l'une des revendications 1 à 8, **caractérisé en ce que** la polymérisation et le moussage sont réalisés au moins partiellement simultanément.

10. Mousse de PMMA, pouvant être obtenue au moyen d'un procédé selon au moins l'une des revendications 1 à 9, **caractérisé en ce que** la proportion de solides de cette mousse est d'au moins 95 % en poids d'un polymère, préparé à partir d'un mélange constitué de 79,70 à 99,995 % en moles de MMA, 0 à 20 % en moles d'un ou plusieurs monomères copolymérisables avec le MMA, 0,002 à 0,5 % en moles d'agent de réticulation, 0,003 à 1,5 % en moles de régulateur et d'un initiateur, et **en ce que** la mousse présente une densité comprise entre 25 et 400 kg/m³.

11. Mousse de PMMA selon la revendication 10, **caractérisée en ce que** la mousse de PMMA présente une densité comprise entre 40 et 250 kg/m³.

12. Mousse de PMMA selon la revendication 10 ou 11, **caractérisée en ce que** le polymère a été formé exclusivement de MMA, d'un initiateur et des composants selon les revendications 4 à 7.
